Europäisches Patentamt

European Patent Office

Office européen des brevets

(11) Publication number: **0 163 504 B1**

# EUROPEAN PATENT SPECIFICATION

(45) Date of publication of patent specification: **09.10.91**  (51) Int. Cl.5: **H04N 9/88**, H04N 5/95,
                                                                          H04N 9/89

(21) Application number: **85303698.6**

(22) Date of filing: **24.05.85**

(54) Video apparatus for correcting time-base errors and for compensating drop-outs.

(30) Priority: **26.05.84 JP 107294/84**

(43) Date of publication of application:
**04.12.85 Bulletin 85/49**

(45) Publication of the grant of the patent:
**09.10.91 Bulletin 91/41**

(84) Designated Contracting States:
**AT DE FR GB NL**

(56) References cited:
**FR-A- 2 529 424**   **US-A- 4 081 826**
**US-A- 4 212 027**   **US-A- 4 287 529**
**US-A- 4 315 331**   **US-A- 4 345 272**

(73) Proprietor: **SONY CORPORATION**
**7-35 Kitashinagawa 6-Chome Shinagawa-ku**
**Tokyo 141(JP)**

(72) Inventor: **Tatami, Mitsushige**
**c/o Sony Corporation 7-35 Kitashinagawa**
**6-chome**
**Shinagawa-ku Tokyo(JP)**

(74) Representative: **Thomas, Christopher Hugo et**
**al**
**D Young & Co 10 Staple Inn**
**London WC1V 7RD(GB)**

## Description

This invention relates to video apparatus for correcting time-base errors and for compensating drop-outs, for example, in a video signal reproduced from a video tape recorder (VTR).

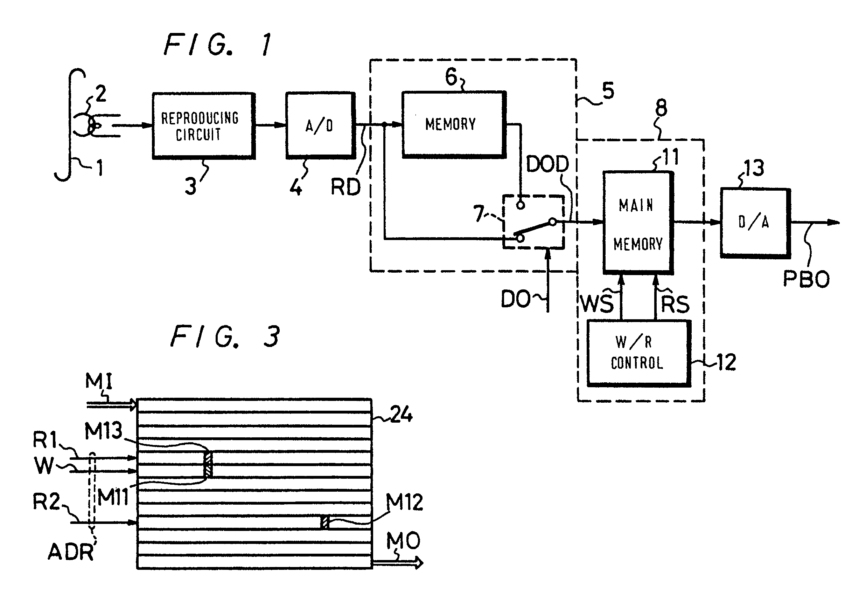

In a VTR, a time-base error corrector (TBC) and a frame synchronizer may be used directly to process a reproduced signal played back from a magnetic tape. In this case, a drop-out of the reproduced signal is compensated for by a drop-out compensating circuit which is provided prior to the TBC and the frame synchronizer. The arrangement is generally as shown in Figure 1 of the accompanying drawings, and is disclosed in greater detail, for example, in US Patent Specification US-A-4,165,524.

As shown in Figure 1, a recorded signal played back from a magnetic tape 1 by a magnetic head 2 is supplied to and processed by a reproducing circuit 3 and then converted to a digital signal by an analog-to-digital (A/D) converter circuit 4 to form a reproduced digital signal RD. The reproduced digital signal RD is supplied to a drop-out compensating (or concealing) circuit 5.

The drop-out compensating circuit 5 comprises a drop-out compensating memory 6 which receives the reproduced digital signal RD, and a switching circuit 7 which is changed over by a drop-out detecting signal DO. The drop-out detecting signal DO is independently detected by a detecting circuit (not shown) when drop-out occurs in the reproduced digital signal RD, thereby to supply the output of the drop-out compensating memory 6 to a time-base error correcting circuit 8, whereas when no drop-out occurs in the reproduced digital signal RD, the switching circuit 7 allows the reproduced digital signal RD to be supplied directly to the time-base error correcting circuit 8.

The drop-out compensating circuit 5 operates such that a picture element where a drop-out has occurred, is replaced with a sampling signal of one line or two lines before, or with an average value of the sampling signals corresponding to the lines before and after the picture element where the drop-out has occurred, thereby compensating the picture element where the drop-out has occurred. Accordingly, when a drop-out occurs in the reproduced digital signal RD, missing picture elements can be compensated for (or concealed) by utilizing the correlation between the lines.

Moreover, in the time-base error correcting circuit 8, a digital signal DOD obtained from the drop-out compensating circuit 5 is received by a main memory 11. On the basis of a write signal WS obtained from a write/read control circuit 12, the main memory 11 stores at a predetermined address sample data supplied thereto at every line.

The data thus written in the main memory 11 are read out therefrom in a predetermined cycle on the basis of a read signal RS obtained from the write/read control circuit 12. These read-out data are supplied to and converted to an analog signal by a digital-to-analog (D/A) converter circuit 13 and then supplied therefrom as a reproduced output PBO. Thus, the reproduced output PBO is a signal in which the jitter component has been corrected on the basis of the digital signal DOD in the cycle of the read signal RS.

As described above, in the known circuit arrangement shown in Figure 1, the main memory 11 with a memory capacity of at least ten lines must be provided, and the drop-out compensating memory 6 with a memory capacity of 1H (H is the horizontal period) or 2H must be provided so as to compensate for the drop-out. Moreover, the control circuits for independently operating the respective memories 6 and 11 must be provided. Accordingly, it is difficult to make the whole circuit arrangement small in size.

US patent specification US-A-4 345 272 discloses apparatus for processing a colour video signal by inhibiting writing of error-containing video signal in a memory, and reading out error-free video signal previously written at the corresponding address, to conceal the error-containing video signal. US patent specification US-A-4 081 826 discloses a time base corrector.

According to the present invention there is provided an apparatus for correcting a time-base error and for compensating a drop-out in a reproduced video signal derived from a record medium by a transducer head, the apparatus comprising:
an analog-to-digital converter for converting said reproduced video signal to a digital video data stream;
a random access memory for memorizing said digital video data stream; and
a correct-video data producing circuit connected to said memory for producing correct video data from said digital video data stream read out from said memory, said correct-video data producing circuit including a phase inverting circuit for inverting a chroma component of an output signal of said memory;
characterized by:
a switching circuit controlled by a drop-out detecting pulse for selectively supplying said digital video data stream or said correct video data to said memory; and
a control circuit for controlling a write and read operation of said memory, said control circuit having a write address generator for generating a write address signal indicating a write address of said memory at which an output signal of said switching circuit is written into said memory upon the generation of said write address signal, a first read address generator for generating a first read address signal indicating a read address of said memory, said first read address signal being asynchronous with said write address signal so that digital video data memorized in said memory are read out without said time-base error, and a second read address generator for generating a second read address signal generated previous to said generation of said write address signal, said second read address signal being synchronous with said write address signal, said second read address signal indicating an address differing from said write address by a predetermined distance, so that said digital video data read out from said memory are supplied back to said memory via said correct-video data producing circuit for compensating a drop-out during generation of said drop-out detecting pulse.

The invention will now be described by way of example with reference to the accompanying drawings, throughout which like parts are referred to by like references, and in which:

Figure 1 is a block diagram showing an example of a known circuit for correcting a time-base error and for compensating a drop-out of a reproduced signal;

Figure 2 is a block diagram showing an embodiment of circuit for correcting a time-base error and for compensating drop-outs of a reproduced signal, and according to the present invention;

Figure 3 is a diagram showing an arrangement of a main memory used in the circuit of Figure 2; and

Figures 4A to 4H are diagrams for explaining the times at which data are written in or read out of the main memory.

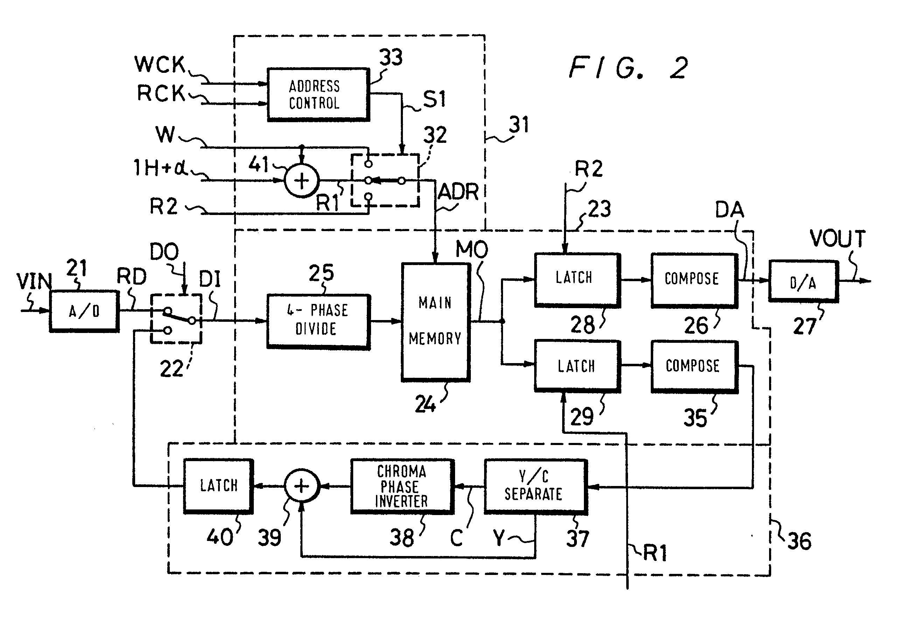

As shown in Figure 2, in the embodiment, a reproduced input VIN is supplied to and converted to a reproduced digital signal RD by an A/D converter circuit 21. The reproduced digital signal RD is supplied through a switching circuit 22, which is changed over by a drop-out detecting signal DO, to a main memory circuit 23.

The main memory circuit 23 includes a main memory 24 with a memory capacity of, for example, 16 lines. In this embodiment, the main memory 24 has four series of memory areas. Input data DI from the switching circuit 22 are divided into four phases by a 4-phase dividing circuit (or demultiplexer) 25 and they are sequentially assigned to the respective series of the main memory 24, so that the data can be processed simultaneously in each series. Accordingly, high-speed data processing is possible using a memory whose access time is relatively low.

The data read out of the main memory 24 are supplied through a latch circuit 28 which is driven by an address signal R2 described later to a synthesizing or composing circuit (or multiplexer) 26 in which they are synthesized as a data signal of a single phase, and then transmitted as a data output DA. The data output DA is supplied to and converted to an analog signal by a D/A converter circuit 27, and then supplied as a reproduced video output VOUT.

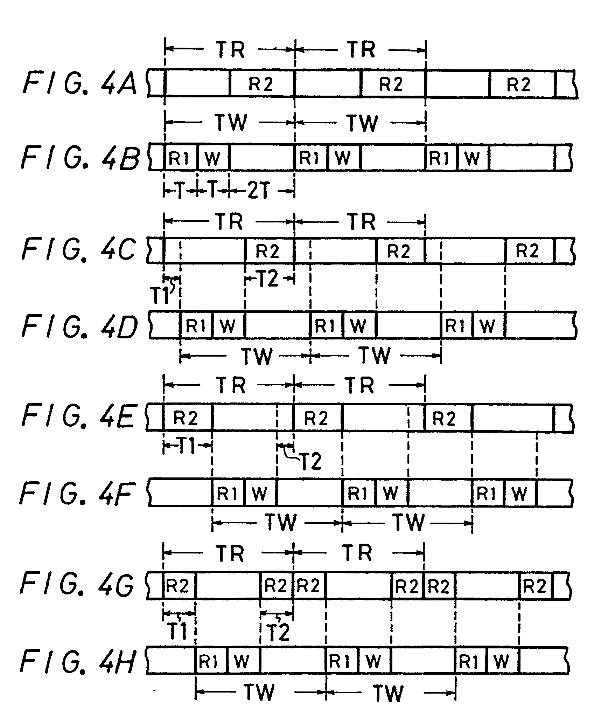

The main memory 24 is formed of a random access memory (RAM) and as shown in Figure 3, input data M1 are firstly written at an address M11 that is accessed by a time-base error correcting write address signal W. Secondly, output data MO are read out from an address M12 that is accessed by a time-base error correcting read address signal R2, and thirdly, data stored at an address M13 that is accessed by a drop-out compensating read address signal R1 are transmitted as the output data MO.

The time-base error correcting write address signal W and the read address signal R2 are generated in asynchronous relation with each other. That is, the read address signal R2 is generated with a predetermined constant period TR as shown in Figure 4A, while the write address signal W is generated with a period TW that is determined on the basis of the synchronizing signal of the reproduced input VIN as shown in Figure 4B. Accordingly, the write address signal W is supplied to the main memory 24 while fluctuating in period TW in response to the jitter produced in the reproduced input VIN, while the read address signal R2 is supplied to the main memory 24 with the predetermined constant period TR. Thus, as the output data MO, there are produced data having no time-base fluctuation. Thus, the relative phase of the write address signal W and the read address signal R2 is being displaced in accordance with the jitter of the reproduced input VIN.

Moreover, the relation between the data write-in and read-out from the main memory 24 is controlled in a time division manner such that the writing is dominant. Consequently, when new input data M1 are supplied thereto, the main memory 24 can always store such new input data M1.

In addition, the drop-out compensating read address signal R1 is supplied to the main memory 24 in synchronism with the write address signal W as shown in Figure 4B. At the time just before the write address signal is supplied to the main memory 24, the read address signal R1 is supplied thereto. Accordingly, when the read address signal R1 is supplied to the main memory 24, the data stored at the address M13 are read out from main memory 24 previous to the read address signal R2. Thereafter, the input data M1 are written at the address M11 by the write address signal W, and subsequently the data MO stored at the address M12 are read out by the read address signal R2 that is low in priority order.

Turning back to Figure 2, the times at which the address signals W, R1 and R2 are supplied to the main memory 24 are determined by the selecting operation of an address selecting circuit 32 of a write/read control circuit 31. An address signal thus selected is supplied to the main memory 24 as its address signal ADR. The address selecting circuit 32 is changed in condition by a control signal S1 which is supplied from an address control circuit 33 that receives a write clock signal WCK having a period TW and a read clock signal RCK having a period TR.

The data MO read out from the address M13 on the basis of the drop-out compensating read address signal R1 as mentioned above are supplied through a latch circuit 29 which is driven by the address signal R1 and a synthesizing or composing circuit (or multiplexer) 35 to a compensated data forming circuit 36. When a drop-out occurs in the data written by the time-base correcting write address signal W, the compensated data forming circuit 36 compensates for (or conceals) the data in such a manner that the data are replaced with sampling data that are, for example, one line before. In the compensated data forming circuit 36, data supplied from the composing circuit 35 are separated by a luminance signal/chroma signal (Y/C) separating circuit 37, the chroma signal C is inverted in phase by a chroma phase inverting circuit 38 and is composed with the luminance signal Y in a composing circuit (or multiplexer) 39. Then, the composed data are latched in a latch circuit 40. When the drop-out detecting signal DO is supplied to the switching circuit 22, the data latched in the latch circuit 40 are supplied through the switching circuit 22 to the main memory circuit 23 as its input data DI.

In order that the content or data stored at the address M13 that is addressed by the drop-out compensating read address signal R1 is at the address just one line before the address M11 that is to be written by the present write address signal W, when the drop-out compensating read address signal R1 is supplied to the address selecting circuit 32, a constant value 1H + $\alpha$ is added to the write address signal W in an adding circuit 41.

In the above-described circuit arrangement, if the memory block is arranged such that the period TW of the time-base error correcting write address signal W and the period TR of the time-base correcting read address signal R2 become longer than four times the memory cycle of the main memory 24, the time-base correcting operation and the drop-out compensating operation can be carried out in a time division manner by using the main memory 24.

That is, as shown in Figures 4A and 4B, when the processing time of one data is T, if the interval in which the time-base correcting write address signal W is supplied and the interval in which the drop-out compensating read address signal R1 is supplied are taken as T, and the interval in which the time-base correcting read address signal R2 is supplied is taken as 2T, three operations of the writing of one datum, the reading of the drop-out compensating data and the reading of the time base correcting data can repeatedly be carried out in a time division manner during the write period TW and the read period TR.

Firstly, the data at the address M13 in which the sample data of just 1H before the present sample data which are to be written by the drop-out compensating read address signal R1 are transmitted as the output data MO and then latched in the latch circuit 40 of the compensated data forming circuit 36. Subsequently, the input data now being supplied are written at the address M11 by the time-base correcting write address signal W. Thereafter, on the basis of the time-base error correcting read address signal R2, the sample data stored at the address M12 are read out as the data output MO, which then are supplied through the latch circuit 28 and the composing circuit 26 and supplied as the digital output data DA.

While such an operation is repeated in every write period TW and read period TR, if drop-out occurs in the data, which are to be written at the address M11 by the time-base correcting write address signal W, the switching circuit 22 is changed over to the side of the latch circuit 40 by the drop-out detecting signal DO to allow the sample data of 1H before, stored in the latch circuit 40, to be supplied to the main memory circuit 23 as the digital input DI, and then written at the address M11 of the main memory 24. Thus, the sample data having the drop-out are compensated for by the sample data of 1H before.

Such a time-base error correcting operation and drop-out compensating operation can be positively carried out even if the relative phase between the time-base error correcting write address signal W and the time-base error read address signal R2 is displaced as shown in Figures 4C, 4D; 4E, 4F; and 4G, 4H.

As described above, in connection with Figures 4A and 4B, from the condition that the drop-out compensating read address signal R1 and the time-base error correcting write address signal W are supplied during the former half of the period TR of the time base error correcting read address signal R2, if the phase of the time-base error correcting write address signal W is delayed a little in accordance with the jitter, as shown in Figures 4C and 4D, the intervals of the address signals R1 and W in the cycle TR of the address signal R2 are delayed a little and the interval of the cycle TR is divided into the first interval T1 and the second interval T2. The reason for this is that the address signal W and hence the address signal R1 are supplied to the main memory 24 previous to the address signal R2.

In this case, however, the addresses accessed by the address signal R2 during the same period TR are the same, so that the addresses to be accessed by the address signal R2 during the intervals T1 and T2 become the same. However, if the length of the interval T1 is shorter than the access time TA of the memory element, the interval in the interval TR in which the data are read out from the address M12 becomes the latter interval T2.

Further, if the phase of the time-base error correcting address signal W is delayed more and becomes as shown in Figures 4E and 4F, the former interval T1 becomes longer than the access time TA, while the latter interval T2 becomes shorter than the access time TA. Accordingly, the interval in which the data are read out from the address M12 at this time becomes the former interval T1.

If the phase of the address signal W is displaced in the condition therebetween, or in such a condition that the former interval T1 and the latter interval T2 both become longer than the access time TA, the same address is accessed at both intervals T1 and T2. In this case, since the same data are read out in both of the intervals T1 and T2, data from either of the intervals T1 and T2 may in practice be used.

As mentioned above, with the circuit arrangement of Figure 2, the time-base error correcting operation and the drop-out compensating operation can be realized by using the common main memory 24. Accordingly, as compared with a case in which a memory capacity is independently provided for carrying out these correcting and compensating operations, the memory capacity can be made significantly smaller.

## Claims

1.  An apparatus for correcting a time-base error and for compensating a drop-out in a reproduced video signal derived from a record medium by a transducer head, the apparatus comprising:
    an analog-to-digital converter (21) for converting said reproduced video signal to a digital video data stream;
    a random access memory (24) for memorizing said digital video data stream; and
    a correct-video data producing circuit (36) connected to said memory (24) for producing correct video data from said digital video data stream read out from said memory (24), said correct-video data producing circuit (36) including a phase inverting circuit (38) for inverting a chroma component of an output signal of said memory (24);
characterized by:
a switching circuit (22) controlled by a drop-out detecting pulse for selectively supplying said digital video data stream or said correct video data to said memory (24); and
a control circuit (31) for controlling a write and read operation of said memory (24), said control circuit (31) having a write address generator for generating a write address signal indicating a write address of said memory (24) at which an output signal of said switching circuit (22) is written into said memory (24) upon the generation of said write address signal, a first read address generator for generating a first read address signal indicating a read address of said memory (24), said first read address signal being asynchronous with said write address signal so that digital video data memorized in said memory (24) are read out without said time-base error, and a second read address generator for generating a second read address signal generated previous to said generation of said write address signal, said second read address signal being synchronous with said write address signal, said second read address signal indicating an address differing from said write address by a predetermined distance, so that said digital video data read out from said memory (24) are supplied back to said memory (24) via said correct-video data producing circuit (36) for compensating a drop-out during generation of said drop-out detecting pulse.

2.  An apparatus according to claim 1 wherein said predetermined distance is substantially equal to the difference in addresses between an address at which current digital video data are written and an address at which digital video data one horizontal line previous to said current digital video data are written, so that said digital video data one horizontal line previous to said current digital video data are written into said memory (24) instead of said current digital video data when a drop-out occurs at said current digital video data.

3.  An apparatus according to claim 1 further comprising a divider (or demultiplexer) (25) connected between said switching circuit (22) and said memory (24) for dividing said output signal of said switching circuit (22) into a plurality of channel signals, so that said memory (24) is operated with the period of said write and read address signals longer than four times the memory cycle of said memory (24).

4. An apparatus according to claim 3 further comprising a first latch circuit (28) and a first parallel-to-serial converter (or multiplexer) (26) connected serially between said memory (24) and an output terminal, and a second latch circuit (29) and a second parallel-to-serial converter (or multiplexer) (35) connected serially between said memory (24) and said correct video data producing circuit (36), said first and second latch circuits (28,29) being driven by said first and second read address signals, respectively.

**Revendications**

1. Dispositif de correction d'une erreur de base de temps et de compensation d'une perte dans un signal vidéo reproduit qui est issu d'un support d'enregistrement au moyen d'une tête de transducteur, le dispositif comprenant :

   un convertisseur analogique/numérique (21) pour convertir ledit signal vidéo reproduit en un train de données vidéo numériques ;

   une mémoire vive (24) pour mémoriser ledit train de données vidéo numériques ; et

   un circuit de production de données vidéo correctes (36) qui est connecté à ladite mémoire (24) pour produire des données vidéo correctes à partir du train de données vidéo numériques extraites de ladite mémoire (24), ledit circuit de production de données vidéo correctes (36) incluant un circuit inverseur de phase (38) pour inverser une composante de chrominance d'un signal de sortie de ladite mémoire (24) ;

   caractérisé par :

   un circuit de commutation (22) commandé par une impulsion de détection de perte pour acheminer de manière sélective ledit train de données vidéo numériques ou lesdites données vidéo correctes à ladite mémoire (24) ; et

   un circuit de commande (31) pour commander une opération d'écriture et de lecture de ladite mémoire (24), ledit circuit de commande (31) ayant un générateur d'adresse d'écriture pour générer un signal d'adresse d'écriture qui indique une adresse d'écriture de ladite mémoire (24) au niveau de laquelle un signal de sortie dudit circuit de commutation (22) est écrit dans ladite mémoire (24) suite à la génération dudit signal d'adresse d'écriture, un premier générateur d'adresse de lecture pour générer un premier signal d'adresse de lecture qui indique une adresse de lecture de ladite mémoire (24), ledit premier signal d'adresse de lecture étant asynchrone avec ledit signal d'adresse d'écriture de telle sorte que des données vidéo numériques mémorisées dans ladite mémoire (24) soient extraites sans ladite erreur de base de temps et un second générateur d'adresse de lecture pour générer un second signal d'adresse de lecture qui est généré avant ladite génération dudit signal d'adresse d'écriture, ledit second signal d'adresse de lecture étant synchrone avec ledit signal d'adresse d'écriture, ledit second signal d'adresse de lecture indiquant une adresse qui diffère de ladite adresse d'écriture d'une distance prédéterminée de telle sorte que lesdites données vidéo numériques extraites de ladite mémoire (24) soient acheminées en retour jusqu'à ladite mémoire (24) via ledit circuit de production de données vidéo correctes (36) pour compenser une perte pendant une génération de ladite impulsion de détection de perte.

2. Dispositif selon la revendication 1, dans lequel ladite distance prédéterminée est sensiblement égale à la différence en adresse entre une adresse à laquelle des données vidéo numériques courantes sont écrites et une adresse à laquelle des données vidéo numériques d'une ligne horizontale avant lesdites données vidéo numériques courantes sont écrites de telle sorte que lesdites données vidéo numériques d'une ligne horizontale avant lesdites données vidéo numériques courantes soient écrites dans ladite mémoire (24) à la place desdites données vidéo numériques courantes lorsqu'une perte se produit au niveau desdites données vidéo numériques courantes.

3. Dispositif selon la revendication 1, comprenant en outre un diviseur (ou démultiplexeur) (25) qui est connecté entre ledit circuit de commutation (22) et ladite mémoire (24) pour diviser ledit signal de sortie dudit circuit de commutation (22) en une pluralité de signaux de canal de telle sorte que ladite mémoire (24) soit activée avec la période desdits signaux d'adresse d'écriture et de lecture qui est quatre fois plus longue que le cycle mémoire de ladite mémoire (24).

4. Dispositif selon la revendication 3, comprenant en outre un premier circuit de bascule (28) et un premier convertisseur parallèle-série (ou multiplexeur) (26) qui est connecté en série entre ladite mémoire (24) et une borne de sortie, et un second circuit de bascule (29) ainsi qu'un second convertisseur parallèle-série (ou multiplexeur) (35) qui est connecté en série entre ladite mémoire (24) et ledit circuit de production de données vidéo correctes (36), lesdits premier et second circuits de bascule (28, 29) étant commandés respectivement par lesdits premier et second signaux d'adresse de lecture.

**Patentansprüche**

1. Vorrichtung zur Korrektur eines Zeitbasisfehlers und zur Kompensation eines Dropouts in einem reproduzierten Videosignal, das mit Hilfe eines Wandlerkopfes von einem Aufzeichnungsmedium wiedergegeben wird,

mit einem Analog-Digitalwandler (21) zum Umwandeln des reproduzierten Vidosignals in einen digitalen Videodatenstrom,

mit einem Speicher (24) mit wahlfreiem Zugriff für die Speicherung des digitalen Videodatenstroms,

sowie mit einer Schaltung (36) zur Erzeugung korrekter Videodaten, die mit dem Speicher (24) verbunden ist, um aus den aus dem Speicher (24) ausgelesenen Videodatenstrom korrekte Videodaten zu gewinnen, wobei diese Schaltung (36) zur Erzeugung korrekter Videodaten eine Phasenumkehrschaltung (38) zur Invertierung einer Farbkomponente in dem Ausgangssignal des Speichers (24) enthält,

**gekennzeichnet** durch

einen durch einen Dropout-Detektorimpuls gesteuerten Schalterkreis (22), der dem Speicher (24) selektiv entweder den digitalen Videodatenstrom oder die korrekten Videodaten zuführt,

und eine Steuerschaltung (31) zur Steuerung der Schreib- und Leseoperation des Speichers (24) mit

- einem Schreibadressengenerator, der ein Schreibadressensignal erzeugt, das eine Schreibadresse des Speichers (24) kennzeichnet, an der bei der Erzeugung des Schreibadressensignals das Ausgangssignal des Schalterkreises (22) in den Speicher (24) eingeschrieben wird,

- einem ersten Leseadressengenerator zur Erzeugung eines ersten Leseadressensignals, das eine Leseadresse des Speichers (24) kennzeichnet, wobei dieses erste Leseadressensignal asynchron zu dem Schreibadressensignal auftritt, so daß in dem Speicher (24) gespeicherte digitale Videodaten ohne Zeitbasisfehler ausgelesen werden, und

- einem zweiten Leseadressengenerator zur Erzeugung eines zweiten Leseadressensignals, das vor der Erzeugung des Schreibadressensignals erzeugt wird, wobei das zweite Leseadressensignal synchron mit dem Schreibadressensignal auftritt, wobei das zweite Leseadressensignal eine Adresse kennzeichnet, die sich von der Schreibadresse durch einen vorbestimmten Abstand unterscheidet, so daß die aus dem Speicher (24) ausgelesenen digitalen Videodaten über die Schaltung (36) zur Erzeugung korrekter Videodaten zu dem Speicher (24) zurückgeführt werden, um während der Erzeugung des Dropout-Detektorimpulses ein Dropout zu kompensieren.

2. Vorrichtung nach Anspruch 1, in der der vorbestimmte Abstand gleich der Adressendifferenz zwischen einer Adresse, an der laufende digitale Videodaten eingeschrieben werden, und einer Adresse, an der digitale Videodaten, die den laufenden digitalen Videodaten um eine horizontale Zeile vorausgehen, eingeschrieben werden, so daß anstelle der laufenden digitalen Videodaten die den laufenden digitalen Videodaten um eine horizontale Zeile vorausgehenden digitalen Videodaten in den Speicher (24) eingeschrieben werden, wenn in den laufenden digitalen Videodaten ein Dopout auftritt.

3. Vorrichtung nach Anspruch 1, bei der ferner ein zwischen dem Schalterkreis (22) und dem Speicher (24) angeordneten Teiler (oder Demultiplexer) (25) vorgesehen ist, der das Ausgangssignal des Schalterkreises (22) in mehrere Kanalsignale aufteilt, so daß der Speicher (24) mit der Periode der Schreib- und Leseadressensignale länger als das Vierfache des Speicherzyklus des Speichers (24) betätigt wird.

4. Vorrichtung nach Anspruch 3, die ferner eine erste Halteschaltung (28) und einen ersten Parallel-Serienwandler (oder Multiplexer) (26) aufweist, die in Reihe zwischen dem Speicher (24) und einem Ausgang angeordnet sind, sowie eine zweite Halteschaltung (29) und ein zweiter Parallel-Serienwandler (oder Multiplexer) (35), die die in Reihe zwischen dem Speicher (24) und der Schaltung (36) zur Erzeugung korrekter Videodaten angeordnet sind, wobei die erste und die zweite Halteschaltung (28,29) durch das erste bzw. das zweite Leseadressensignal gesteuert wird.

EP 0 163 504 B1

*F I G. 1*

REPRODUCING CIRCUIT

3

A/D

4

RD

MEMORY

6

5

DOD

7

DO

MAIN MEMORY

11

8

WS   RS

W/R CONTROL

12

D/A

13

PBO

*F I G. 3*

MI

R1   M13

W

R2

M11

ADR

24

M12

MO

FIG. 2

FIG. 4A

FIG. 4B

FIG. 4C

FIG. 4D

FIG. 4E

FIG. 4F

FIG. 4G

FIG. 4H